# EUROPEAN PATENT SPECIFICATION

(11) **EP 0 928 102 B1**
(45) Date of publication and mention of the grant of the patent: **09.06.2004**
(21) Application number: 98310638.6
(22) Date of filing: 23.12.1998
(51) Int. Cl.: H04N 5/217, H04N 3/15

(54) **Array sensors**
Matrixsensoren
Capteurs matriciels

(30) Priority: 31.12.1997 US 70083 P
(43) Date of publication of application: 07.07.1999
(73) Proprietor: TEXAS INSTRUMENTS INCORPORATED, Dallas Texas 75265 (US)
(72) Inventor: Chen, Zhiliang Julian, Dallas, Texas 75093 (US); Dierschke, Eugene G., Dallas, Texas 75248 (US)
(74) Representative: Meldrum, David James

(56) References cited:
- WO-A-98/54890
- US-A- 4 387 402
- US-A- 4 407 010
- US-A- 4 445 117
- US-A- 5 449 908
- US-A- 5 471 515

## Description

The present application is related to: US patent application number 60/070,082 entitled "Sequential Correlated Double Sampling Technique for CMOS Area Array Sensors" filed on December 31, 1997; and US patent application number 60/070,223 "Mismatch Independent Reset Sensing for CMOS Area Array Sensors" filed on December 31, 1997. Copies of these related applications were filed with the present European patent application and are available for public inspection in the official file.

The invention relates to array sensors, more especially but not exclusively to read-out circuitry therefor.

US 4,387,402 describes a charge injection imaging device for faithful (dynamic) scene representation; US 5,471,515 describes an active pixel sensor with intra-pixel charge transfer; US 5,449,908 describes hybrid CCD imaging; US 4,407,010 describes a solid state image pick-up device; and US 4,445,117 describes a transistorized focal plane having floating gate output nodes.

Imagers based on the charged couple device ("CCD") are in widespread use. CCD imager circuits require a manufacturing process which is incompatible with standard CMOS processing. Thus CCD imager circuits cannot be integrated on a single chip with other circuits that provide support functions. For example, separate CCD control, A/D conversion, and signal processing chips are needed. The operation of a CCD imager also requires multiple voltage supplies varying from, e.g. 5V to 12V.

In CMOS area array sensors, each column (or row) has separate read circuitry. Driver mismatches between different columns produce column FPN. Much of the device mismatches are caused by the threshold voltage deviations between CMOS transistors across the wafer.

Techniques such as Correlated Double Sampling ("CDS"), and Sequential Correlated Double Sampling ("SCDS") can be used to suppress fixed pattern noise in CMOS imagers. In general, in a CDS architecture, a pixel sensing NMOS transistor performs double samplings. First the photo diode ("PD") voltage signal is sensed, then a known, fixed voltage (for example, Vdd) is sensed. Subtraction is then performed to suppress the mismatch effect caused by pixel sensing NMOS transistor variations in a wafer.

For an on-chip integrated CDS system sensor array, the fixed pattern noise would be greatly reduced. But due to the additional sampling steps required for CDS, the sensor array requires additional clock signals for one pixel readout, and thus increases the length of time for readout of a whole array (or a frame) for a given clock speed. This results in a low frame rate and limits the capabilities of the sensor in live video application to approximately 30 frames per second.

CMOS imagers have also been previously proposed as imagers, but their use has been limited.

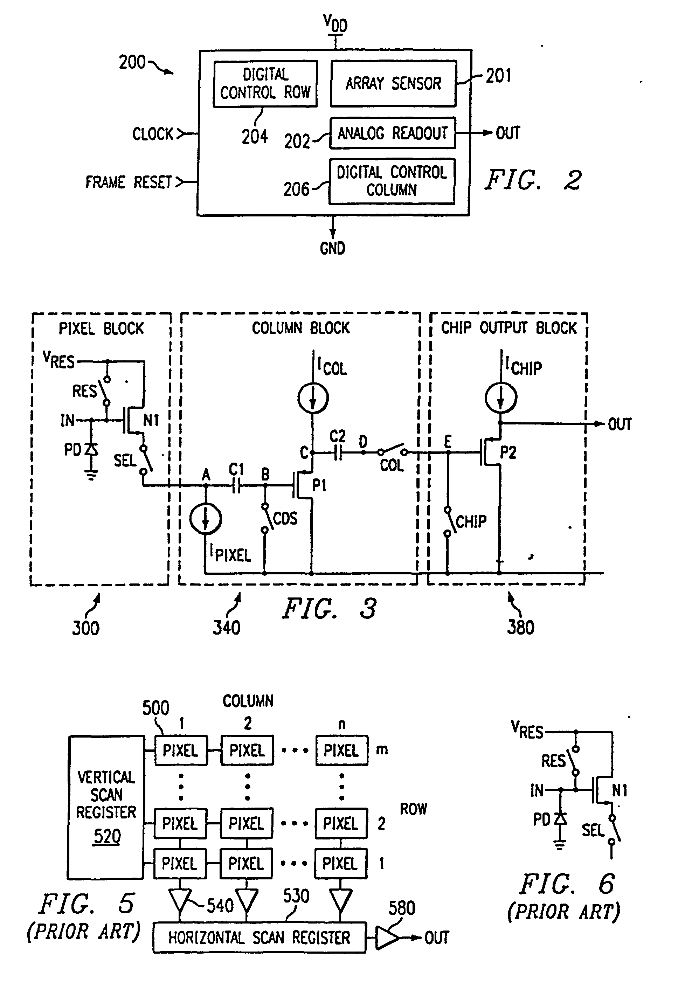

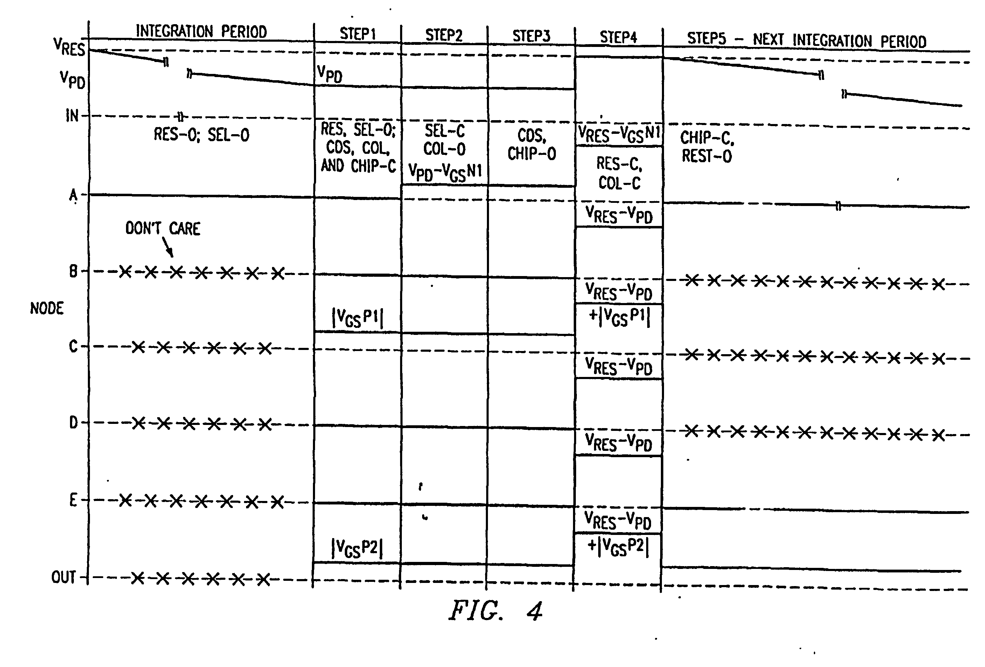

One disadvantage with CMOS imagers is Fixed Pattern Noise ("FPN"). FPN is a built-in characteristic of X-Y addressable devices. FPN is noise that appears in a fixed pattern because the noise level is related to the position of the pixel in the array, the geometry of the column bus, and the proximity of other noise sources. (In addition, there is purely random noise not correlated to the pixel position, but due to inherent characteristics of the detector.) FPN results from process limitations which produce device mismatches and/or non-uniformities of the sensor during fabrication on a wafer. FPN consists of both pixel FPN and column FPN. Each pixel circuit comprises at least a photodiode and a sensing transistor (operating as source-follower) as shown in Figure 2 of the accompanying drawings. Mismatches of the sensing transistor between pixels may produce different output levels for a given input optical signal. The variations of these output levels is called pixel FPN. Additionally, each column (or row) has separate read circuitry. Driver mismatches between different columns (or rows) produce column FPN. Most device mismatches are caused by threshold voltage (V_{T}) mismatches among CMOS transistors across the wafer.

A conventional way of FPN suppression is to use a memory block to store the signal data for a whole frame and to subtract the FPN by sampling a reset voltage for the whole frame. The subtraction is done on a frame-by-frame basis and tends to result in slow frame rates.

A technique called Correlated Double Sampling ("CDS") can be used to remove several kinds of noise in high-performance imaging systems. CDS involves taking two samples of a sensor output. First, a reference sample is taken that includes background noise and noise derived from a device mismatch. Then, a second sample is taken of the background noise, device mismatch, and the data signal. Subtracting the two samples removes any noise which is common (or correlated) to both, leaving only the data signal.

CDS is discussed in greater detail in a paper by Chris Mangelsdorft et al, 1996 IEEE International Solid-State Circuits Conference, pages 186 and 187.

The invention is set out in the accompanying independent and dependent claims.

Viewed from one aspect, the present invention provides an integrated imaging chip having an array of pixel circuits arranged in columns and rows, each pixel circuit including a photosensitive element, a sense transistor and a reset switch, the reset switch for providing a reset voltage to a gate of the sense transistor during a sequence of first intervals, and the photosensitive element for providing a pixel voltage during a sequence of second intervals alternating with the first intervals, the pixel circuits being sequentially selectable for read-out, characterised by: a circuit comprising a first capacitor and a first switch for storing across the first capacitor a first stored voltage comprising a pixel voltage from a selected pixel circuit, minus a gate-to-source voltage of a sense transistor of the selected pixel circuit, during a first interval, and for subtracting the first stored voltage from a second voltage comprising the reset voltage minus the gate-to-source voltage of the sense transistor of the selected pixel circuit, to produce a first output voltage for the selected pixel circuit, during a second interval.

An embodiment provides a high-speed pixel readout technique in a CMOS imager while minimising low fixed pattern noise. A fast frame readout rate can be realised for sensor array with an on-chip integrated SCDS technique. The technique, optionally together with a SCDS technique, enables one to achieve the CDS operation for a whole row of pixels simultaneously. Pixels can then be read out at the rate of one pixel per clock cycle. Prior-art systems utilise row and column decoders, or perhaps row and column shift registers for digital control readout. By contrast, an embodiment of the present invention implements a one-hot-coded-flip-flop architecture to simplify the digital control readout.

Fewer clock cycles are required to read out the pixels. After an initial read-preparation phase of no more than four clock cycles, each pixel of a row requires only one additional clock cycle to be readout. Significant savings can be made in chip real estate associated with the high-speed readout. Moreover, faster frame rates are possible.

Another embodiment provides an integrated imaging chip, comprising: a plurality of pixels in an m row by n column array; a plurality of column readout circuits, each operatively connected to receive pixel signals from at least one respective column of said pixels; and an output circuit operatively connected to receive data signals from each of said column readout circuits; wherein said column readout circuits are collectively configured to all perform, in parallel, sequentially correlated double sampling operations on pixel readout data, and then in succession, to serially provide respective analog outputs to said output circuit.

The array may comprise row and column select circuits comprising one-hot encoded flip-flops. Morever, a row rest circuit may be included and can comprise one-hot encoded flip-flops.

Another embodiment provides an integrated MOS imaging chip, comprising: a plurality of pixels in an m row by n column array; a plurality of row select circuits operatively connected to each of said pixels; wherein said row select circuit provides at least a first row command to said pixels; wherein ones of said row select circuit are operatively connected to ones of said pixels; a plurality of row reset circuits: wherein ones of said row reset circuit are operatively connected to ones of said pixels; a plurality of column readout circuits operatively connected to receive signals from said pixels; wherein each of said column readout circuits are operatively connected to receive signals from a column of pixels; a plurality of column control circuits; wherein ones of said column control circuit are operatively connected to ones of said column selection circuit; and an output circuit operatively connected to receive data signals from each of said column readout circuits; wherein successive pixels of a row are read out by successive clock signals in a one-to-one relationship.

A further embodiment provides an imaging system, comprising: a focusing element; an integrated MOS imaging chip for receiving images from said focusing element, and comprising: a plurality of pixels in an m row by n column array; a plurality of row select circuits operatively connected to each of said pixels; wherein said row select circuit provides at least a first row command to said pixels; wherein ones of said row select circuit are operatively connected to ones of said pixels; a plurality of row reset circuits: wherein ones of said row reset circuit are operatively connected to ones of said pixels; a plurality of column readout circuits operatively connected to receive signals from said pixels; wherein each of said column readout circuits are operatively connected to receive signals from a column of pixels; a plurality of column control circuits; wherein ones of said column control circuit are operatively connected to ones of said column selection circuit; and an output circuit operatively connected to receive data signals from each of said column readout circuits; wherein successive pixels of a row are read out by successive clock signals in a one-to-one relationship; a microprocessor for processing images from said imaging chip; and a storage medium for storing said processed images.

Viewed from another aspect, the present invention provides a method for reading pixel voltages of an integrated imaging chip having an array of pixel circuits arranged in columns and rows, each pixel circuit including a photosensitive element, a sense transistor and a reset switch, the reset switch for providing a reset voltage to a gate of the sense transistor during a sequence of first intervals, and the photosensitive element for providing a pixel voltage during a sequence of second intervals alternating with the first intervals, the pixel circuits being sequentially selectable for read-out: storing across a first capacitor a first stored voltage comprising a pixel voltage from a selected pixel circuit, minus a gate-to-source voltage of the sense transistor of the selected pixel circuit, during a first interval; and subtracting the first stored voltage from a second stored voltage comprising the reset voltage minus the gate-to-source voltage of the sense transistor of the selected pixel circuit, to produce an output voltage for the selected pixel circuit, during a second interval.

One embodiment provides a method for reading pixels in an area array sensor, comprising the steps of: initialising column readout circuitry for receipt of pixel data signals, in an m row by n column area array; selecting said pixels individually by selectively engaging row and column select circuits; and reading a row of said pixels, said pixels read individually and successively in a one-to-one relationship with successive clock signals.

It is thus possible to exploit recent advances in CMOS technology to provide imagers offering significant improvements in functionality, power, and cost of, for example, for digital video and still cameras. Sub-micron CMOS technology can be used to realise pixels which contain several FETs and provide imagers comparable in size to those existing on commercial CCD imagers. Fabrication on standard CMOS process lines permits these imagers to be fully integrated with digital circuitry to create single-chip camera systems. A CMOS area array sensor (or CMOS imager) according to an embodiment of the invention can be fabricated together with other system functions, e.g. controller, A/D, signal processor, and DSP. Hence, the cost of a CMOS based system can be reduced. A CMOS imager can be provided which is operable with a single low supply voltage, e.g. 3.3V or 5V providing relatively low power consumption.

For a better understanding of the invention and to show how the same may be carried into effect reference is now made by way of example to the accompanying drawings in which:
Figure 1 shows an embodiment of one-hot-encoded readout circuitry;
Figure 2 shows a block diagram of a chip incorporating the readout circuitry;
Figure 3 shows a circuit diagram of Sequential CDS pixel readout circuitry;
Figure 4 shows a timing diagram of voltages at the various nodes designated in Figure 3 during the integration and readouts phases; Figure 5 shows a typical CMOS area array of m pixels x n columns;
Figure 6 shows a typical single active pixel circuit;
Figure 7 shows a schematic of a single column circuit;
Figure 8 shows a schematic close up of 6 row select cells;
Figure 9 shows a schematic of the digital controller for both the rows and columns;
Figure 10 shows a sequence of events which occur when the column circuits read the pixels; and
Figure 11 shows a camera system incorporating the readout circuitry of an embodiment of the invention.

Two different types of sensors can be realised in CMOS technology. These are passive and active pixel sensors. The difference between these two types is that a passive pixel does not perform signal amplification whereas an active pixel does. A passive-pixel sensor is simply a photodiode (MOS or p-n junction diode) with a transistor that passes photoelectrically generated signal charge to an amplifier outside of the pixel array (a sensing transistor, e.g. N1 is not present in a passive pixel circuit).

Figure 6 shows a typical active-pixel sensor circuit. The gate of transistor N1 is connected to a reset switch RES and the cathode of a photodiode PD. Initially, the reset switch RES is closed and the voltage at node IN approximates the reset voltage V_{RES}. A finite charge exists at node IN which is dependent on the voltage V_{RES}, and the capacitances of both the photodiode PD and gate of the NMOS transistor N1. When switch RES is opened, the photodiode current causes the charge at node IN to be discharged, and the voltage at node IN decreases. After a fixed integration time, the voltage at node IN drops to V_{PD}, the voltage of the photodiode. Switch SEL (in conjunction with NMOS transistor N1) is used to read the voltage at node IN.

Figure 5 shows a typical array of pixel circuits with readout support circuitry. In this CMOS imager, each pixel block comprises a photosensitive diode or other junction device which converts photons into charge. Pixel block 500 represents a single pixel block in an array of pixel blocks (n columns x m rows). Column amplifier block 540 is one of many column amplifiers and/or drivers that provide the interface from the column 505 of individual pixel blocks 500 to the chip output buffer/amplifiers block 580. Horizontal and vertical scan registers (530 and 520) transfer the pixel signals onto the readout lines. The signal is amplified for use by later circuitry.

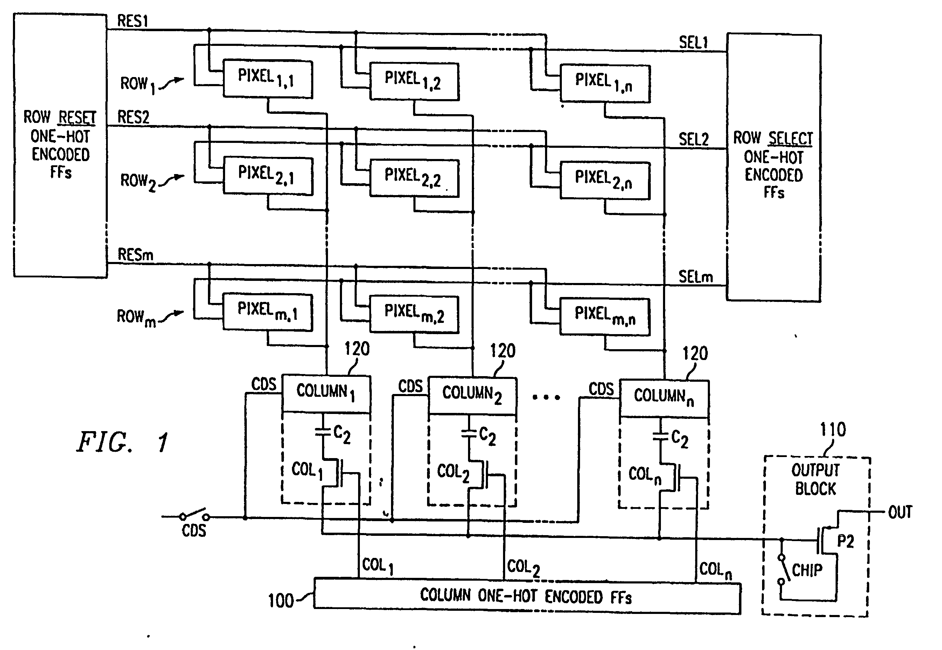

Figure 1 shows an embodiment of a one-hot-encoded readout architecture applied to an area array. The readout operation of the pixel array is performed in a significantly smaller number of clock cycles than provided by conventional architectures.

After an integration period (0.1 - 30ms may be an approximate range of integration times), pixel readout is performed for a specific row, for example Row₁. The remaining rows (Row₂ through Rowₘ) of the m row x n column pixel array are in an integration period and nearing the time to be read (select switches SEL₂ through SELₘ are open). However, before all pixels of a given row are read, all column switches COL₁ - COLₙ are closed along with switches CHIP and CDS, to initialise all column readout circuits 120, and prepare for the correlated double sampling process.

Step 2 begins by closing switch SEL₁ (linked to all Row₁ pixels), and opening all column switches COL₁ - COLₙ (linked to individual columns of pixels). Closing switch SEL₁ couples the photodiode voltages (developed in the first row of pixels Row₁) to each of the respective column readout circuits 120.

In Step 3, switches CDS and CHIP are opened. The column readout circuits 120 are now ready to read the reference voltage from the first row of pixels Row₁. After reading the reference voltage, the voltage difference of the reference voltage and the photodiode voltage (less any FPN noise) is now present for output.

Step 4 encompasses the column block selection process for reading all pixel data from the column readout blocks 120 and sending it to the output OUT of the chip output circuitry 110. The data readout process is accomplished using a bank of one-hot encoded flip-flops 100 which control column switches COL₁ - COLₙ. For Row₁ pixel readout, the respective column switches (COL₁ - COLₙ) for each column close only once.

In Step 4a_{COL1}, column switch COL₁ of the first column readout circuitry Column, is closed to read Pixel_{1,1} (all other column switches COL₂ - COLₙ remain open). In Step 4b_{COL1}, after Pixel_{1,1} is read, column switches COL₁ is opened (COL₂ - COLₙ are still open), and switch CHIP is closed to reset the gate voltage of transistor P2 in output block 110. Continuing on, in Step 4a_{COL2}, switch CHIP is opened, and switch COL₂ of column readout circuit Column₂ is closed to read Pixel_{1,2}.

The readout process in Step 4 continues until the last pixel of the first row, Pixel_{1,n} of Row₁, has been read. The bank of one-hot-coded flip-flops 100 connect to the second row of pixels Row₂ and repeat the process from Step 1 above. After the readout of the last row of pixels Rowₘ is completed, switch SELₘ is opened.

In a single clock cycle, the high pulse period can be used for closing switch COL, and the low pulse period can be used for opening switch CHIP. This means that during row pixel readout, the switch COL is always complemented with the switch CHIP. Therefore, in Step 4, the circuit obtains a fast pixel readout rate of one pixel per clock cycle.

Table I summarises the switch positions during the integration period and pixel readout.

**Table I**

| Column Select and Pixel Readout | | | | | | | |
|---|---|---|---|---|---|---|---|
| | RESₘ | SELₘ | CDS | COL₁ | COL₂ ... COLₙ | | CHIP |
| Integration period | 0 | 0 | X | X | X | X | X |
| Readout Step 1 | 0 | 0 | C | C | C | C | C |
| Readout Step 2 | 0 | C | C | 0 | 0 | 0 | C |
| Readout Step 3 | 0 | C | 0 | 0 | 0 | 0 | 0 |
| Readout Step 4a_{COL1} | C | C | 0 | C | 0 | 0 | 0 |
| Readout Step 4b_{COL1} | C | C | 0 | 0 | 0 | 0 | C |
| Readout Step 4a_{COL2} | C | C | 0 | 0 | C | 0 | 0 |
| Readout Step 4b_{COL2} | C | C | 0 | 0 | 0 | 0 | C |
| .... | | ... | | | | | |
| Readout Step 4a_{COLn} | C | C | 0 | 0 | 0 | C | 0 |
| Readout Step 4b_{COLn} | C | C | 0 | 0 | 0 | 0 | C |
| Ready for next pixel | | | | | | | |
| readout | | | | | | | |

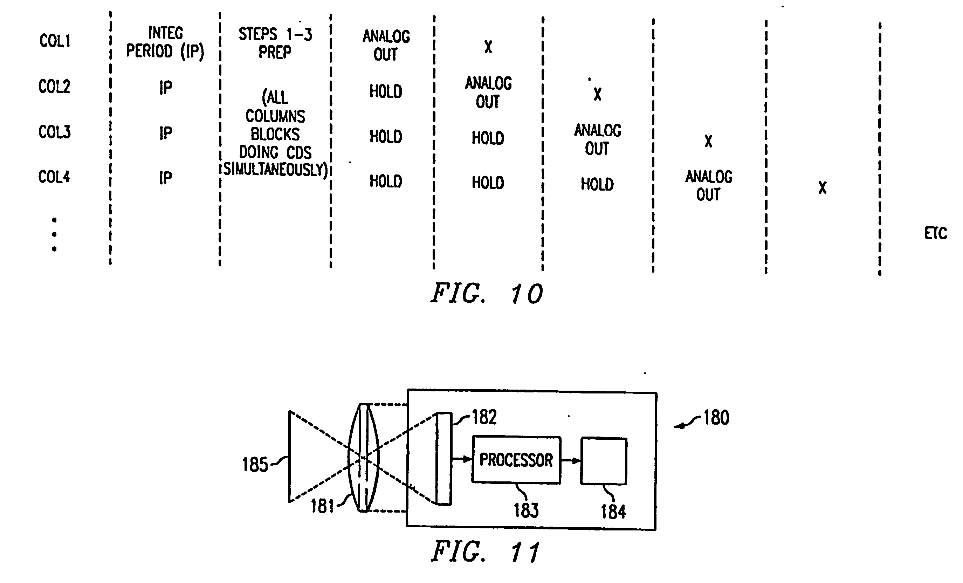

Figure 10 shows a sequence of events which occur when the column circuits read the pixels. Assuming that initially, all pixels are in the integration phase, steps 1-3 are performed to prepare the column circuitry Column1 and output circuit for readout of the Column1 pixels. Next, all column circuits perform a parallel read of their respective first row pixel circuits and hold the data. The one-hot-coded flip-flops now signal successively, each column circuit such that the pixel data read from each column circuit is sent to the output circuitry in a serial fashion.

Figure 2 shows a block diagram of a chip incorporating the area array readout circuitry. The MOS imaging chip 200 comprises all necessary support functions on-board. The area array sensor circuitry 201 comprises m rows x n columns of pixel circuits. Row and column digital control circuits (204 and 206, respectively) provide the necessary control for selecting specific pixels for readout. The readout signals are passed to the analog readout circuitry 202 for output of the pixel data at terminal OUT. CLOCK and FAME RESET signals are provided for synchronisation of functions. Power VDD and ground GND are provided as noted.

Figure 11 shows a camera system incorporating the fast readout architecture. A camera 180 has a lens 181 which focuses an image 185 onto the image sensor chip 182. A processor 183 receives the data from the image chip 183 and sends it to a storage system 184.

Figure 3 is a simplified diagram of an SCDS architecture. The following discussion centres around a single pixel read operation, but it should be understood that a typical sensor comprises numerous pixel circuits in an array, as shown in Figure 1. The principal blocks are the pixel block 300, the column block 340, and chip output block 380.

The primary components of the column block 340 (one for each column of pixels) are capacitors C1 and C2, PMOS transistor P1, switches CDS and COL, and current sources I_{PIXEL} and I_{COL}. The chip output block 380 (one circuit for the whole chip) comprises, in this example, a PMOS transistor P2, a switch CHIP, and a current source I_{CHIP}. Typical approximate device parameters in a 0.6 micron process are the following: capacitors C1 and C2 range from 1-4 pF; current source values are 5-10 microamps for I_{PIXEL}, 20-100 microamps for I_{CHIP}, and 10-100 microamps for I_{COL}; sizes for transistors P1 and P2 50/0.6; transistor N1 approximates 2/0.6; and transistor RES approximates 1.25/0.6.

Opening switch SEL allows the column block circuitry 340 and chip output block circuitry 380 to be used for readout of signals from other pixels during the instant pixel's integration period.

At the start of the integration period, switch RES is closed and the voltage at node IN approximates the reset voltage V_{RES}. Next, opening switch RES begins the integration period, and allows current from the photodiode PD to remove charge from input node IN, thus decreasing the voltage at node IN from V_{RES} to V_{PD}.

In Step 1, switches CDS, COL, and CHIP are closed. Closing switches CDS, COL, and CHIP initialises both the column block circuitry 340 and chip block circuitry 380 in preparation for the first readout of the charge at input node IN. The voltage across capacitor C1 approximates zero (current source I_{PIXEL} removes any charge from capacitor C1) when switch CDS is open, and the voltage across C2 is V_{gsP1} (the gate-to-source voltage of PMOS transistor P1). The voltage at the output OUT is low (at V_{gsP2}).

Step 2 begins by closing switch SEL and opening switch COL. Closing switch SEL couples the voltage developed at input node IN to the column block circuitry 340. With switch CDS still closed, capacitor C1 charges. The voltage across C1 becomes V_{PD} - V_{gsN1} (where V_{gsN1} is the gate-to-source voltage ofNMOS transistor N1, and V_{PD} is the voltage at node IN at the end of the integration period). The voltage across C2 remains at V_{gsP1}. The voltage at the output OUT remains at a low level (V_{gsP2}).

In Step 3, switches CDS and CHIP are then opened. Nodes B and E are now floating (or more precisely, not actively driven). The voltage across C1 remains V_{PD} - V_{gsN1} and the voltage across C2 remains at V_{gsP1}. The voltage at the output OUT remains at a low level (V_{gsP2}). The column block circuit 340 is now ready to read the reference voltage V_{RES}. Note that both capacitors C1 and C2 are required for cancellation of the device threshold variations. Capacitor C1 cancels per-pixel V_{T} variations, and capacitor C2 cancels variations in column amplifiers.

In Step 4, switches RES and COL are then closed. Closing switch RES while switch SEL is closed initiates sampling of the reference voltage V_{RES} by the column block circuitry 340. The source voltage of transistor N1 becomes V_{RES} - V_{gsN1}. The voltage across C1 remains at V_{PD} - V_{gsN1}. Thus the gate voltage of transistor P1 rises to the difference of the reference voltage and the data signal voltage, and becomes (V_{RES} - V_{gsN1}) - (V_{PD} - V_{gsN1}) = V_{RES} - V_{PD}. The source voltage of transistor P1 becomes (V_{RES} - V_{PD}) - V_{gsP1} (since this is a P-channel device, voltage V_{gsP1} is a negative value). The voltage across C2 remains V_{gsP1}. Thus the gate voltage of transistor P2 becomes (V_{RES} - V_{PD}) - V_{gsP1} + V_{gsP1} = V_{RES} - V_{PD}, the voltage difference between the reference voltage and the data signal voltage. The readout voltage OUT is V_{RES} - V_{PD} + V_{gsP2}, where V_{gsP2} is the gate-to-source voltage of PMOS transistor P2. Transistor P2 is a common device used for the readout of all pixels, but the chip output block circuitry 380 covers a wide variety of output circuits and may comprise a number of other techniques, e.g. differential amplifier circuits, linear circuitry, or any type of driver circuits for outputting the data from the chip.

Both V_{gsN1} and V_{gsP1} terms are cancelled using the SCDS technique. Additionally, the V_{T} term of both transistors N1 and P1, which are embedded in V_{gsN1} and V_{gsP1}, are not present in the above equation. Thus the effect of CMOS threshold voltage mismatches are significantly suppressed and FPN is reduced substantially.

Lastly, in Step 5, switch CHIP is closed and all other switches are opened. The voltage difference of V_{RES} and V_{PD} at the gate of transistor P2 is pulled to a low state leaving the readout voltage OUT equal to V_{gsP2}. Opening switches RES and SEL resets the pixel circuit for the next integration period. The system is ready for the next pixel readout During the integration period of the present pixel (used in this example), the column 340 and chip output 380 blocks are being used for the readout of other pixels.

The following Table I summarises all switch positions during the integration period and pixel readout.

| | | | | | |
|---|---|---|---|---|---|
| (O=open, C=closed, x=don't care) | | | | | |

| Switch | RES | SEL | CDS | COL | CHIP |
|---|---|---|---|---|---|
| Integration Period | O | O | x | x | x |
| Readout Step 1 | O | O | C | C | C |
| Readout Step 2 | O | C | C | O | C |
| Readout Step 3 | O | C | O | O | O |
| Readout Step 4 | C | C | O | C | O |
| Readout Step 5 | O | O | O | O | C |
| Ready for next Pixel readout | | | | | |

For the first order approximation, V_{gsN1} and V_{gsP1} depend primarily on the biased currents of I_{PIXEL} and I_{COL}. However, V_{gsN1} and V_{gsP1} also are functions of drain voltages and backgate voltages. Although the SCDS technique cannot cancel all of the pattern noise, the technique provides a way significantly to suppress it.

In a passive pixel arrangement, sensing transistor N1 is not present. Additionally, the capacitor C1 and current source I_{PIXEL} are also not present. However, transistor RES is present.

The following Table II lists the simulated pixel readout, with and without the SCDS technique, for transistor N1 threshold voltage, V_{T}, variations in Texas Instrument's ("TI's") 33A21 process (0.6 micron, double-poly, triple-level metal).

| | | | | | | | |
|---|---|---|---|---|---|---|---|
| V_{T} variation (mV) | +50 | +20 | +6 | 0 | -6 | -20 | -50 |
| | | | | | | | |
| Readout variation without SCDS (mV) | +42 | +16.7 | +5 | 0 | -5.1 | -16.8 | -41.8 |
| | | | | | | | |
| Readout variation with SCDS (mV) | +1.7 | +0.7 | +0.2 | 0 | -0.18 | -1 | -3 |

The following Table III presents simulated pixel readout voltages for both transistor N1 and transistor P1 threshold voltage V_{T} variations in TI's 50BP21 process (0.72 micron, double-poly, triple-level metal).

| | | | | | | | |
|---|---|---|---|---|---|---|---|
| V_{T} variation (mV) | +20 | +10 | +5 | 0 | -5 | -10 | -20 |
| | | | | | | | |
| Readout variation caused by N1 (mV) | +1.2 | +0.6 | +0.2 | 0 | -0.2 | -0.7 | -1.2 |
| | | | | | | | |
| Readout variation caused by P1 (mV) | +0.03 | +0.01 | +0.005 | 0 | -0.005 | -0.01 | -0.03 |

The simulation results clearly show that the SCDS technique suppresses FPN to about 1/25 to 1/20 of that without the SCDS technique. In these two processes, the V_{T}. variation in a wafer is approximately 5 to 6 mV. Therefore, the FPN could be as low as 0.2 mV, if the SCDS technique is applied.

Figure 4 shows a timing diagram of voltages at the various nodes designated in Figure 1 during the integration and readout phases.

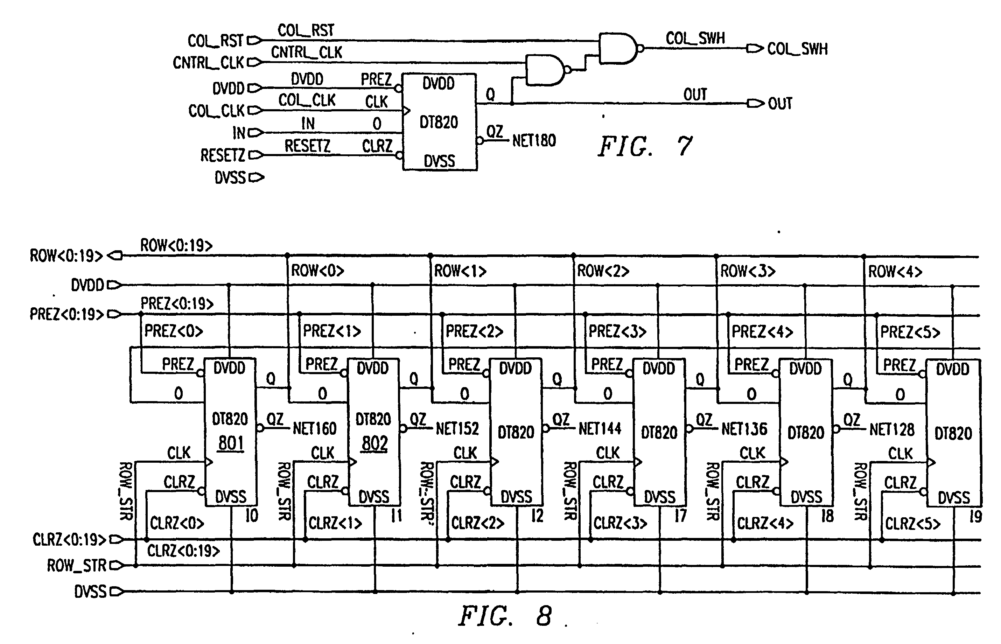

Figure 7 shows a schematic of a single column select circuit. The basic cell comprises two NA240 NAND gates and a DTB20 edge-triggered D-type flip-flop. The col_rst command translates to the aforementioned COL switch which, when closed, initialises the column block circuit. The resetz signal line provides the reset capability for the DTB20 device. The cntrl_clk input provides synchronised timing signals for the whole column circuit. The col_clk signal provides the edge-triggered timing for the DTB20 device, and consequently for the one-hot encoded architecture.

Figure 8 shows a schematic of 6 row select cells from a bank of 20 row select circuits (0-19). For example, device 801 may be dedicated to handle the first row Row₀ of pixels, device 802 for the second row Row₁ of pixels, etc. The row_str signal strobes the edge-triggered clocking input to each of the DTB20 devices.

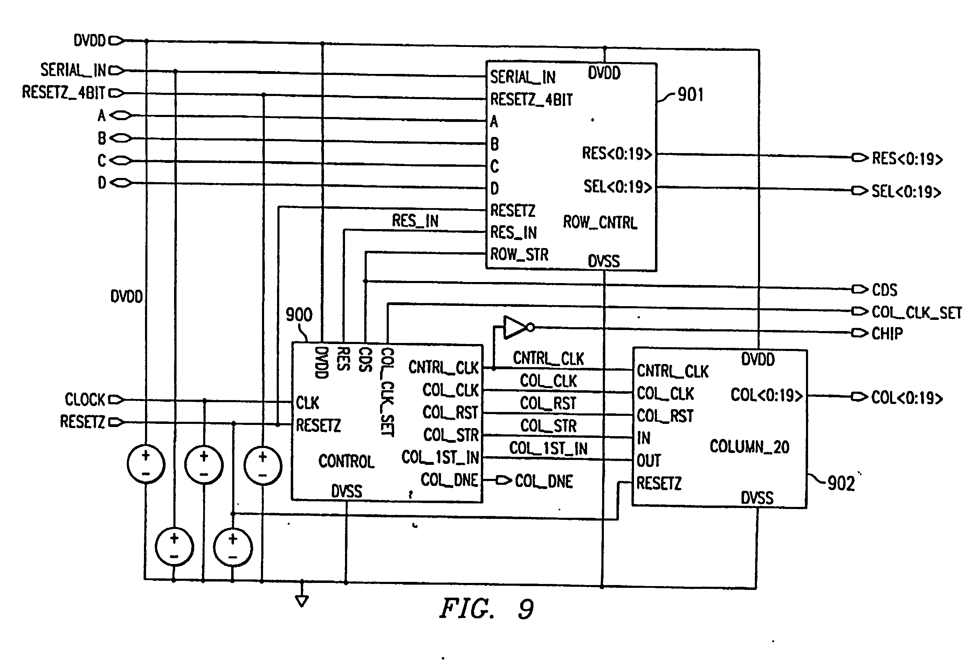

Figure 9 shows a schematic of the digital control section for both the rows and columns of a 20x20 area array sensor, as shown generally in Figure 2. (It should be noted that larger sensor arrays may also be constructed). A central controller 900 provides primary control for row control circuit 901 and column control circuit 902. Row control circuit 901 provides the reset switch RES and select switch SEL commands to each of the pixel circuits. Column control circuit 902 provides control over all 20 columns, in this particular example. Primary controller 900 also provides switch CDS and switch CHIP closure control for the column block circuits and chip output block, respectively.

Embodiments of the invention may be modified or varied, for example as follows.

The described process steps can also be embedded into hybrid process flows, such as BiCMOS or smart-power processes.

A sequential correlated doubling sampling method is not necessarily limited to serial reads, but may also use other methods.

A variety of well-known output driver configurations can be substituted for those shown.

Two or even four column blocks may be implemented for the column readout circuitry.

In larger area array sensors, it may be advantageous to employ one output block circuit per column readout circuit to increase the readout speed.

In larger area array sensors, it may be advantageous to readout a complete row of pixels at one time (in a parallel fashion) by adding circuitry to handle the parallel readout

The one-hot-encoded circuitry may be replaced with other circuitry providing similar capability.

## Claims

1. An integrated imaging chip having an array of pixel circuits (300) arrange in columns and rows, each pixel circuit including a sense transistor, a photosensitiv element (PD) coupled to a gate of the sense transistor (N1), a select switch (SEL having a first terminal coupled to a source of the sense transistor and a reset switcl (RES) having a terminal coupled to the gate of the sense transistor, the reset switch for providing a reset voltage (V_{RES}) to the gate of the sense transistor during a reset interval preceding an integration interval, the photosensitive element being responsive to a level of light thereon for changing the voltage on the gate of the sense transistor during the integration interval in accordance with the level of light on the photosensitive element, to thereby cause a pixel voltage (V_{PD}) on the gate of the sense transistor at the end of the integration interval, the pixel circuit being selected for read-out by the closing of the select switch, **characterized by** the chip further comprising:
a plurality of column switching circuits (340) each connected to receive pixel signals from at least one column of pixel circuits, each column switching circuit comprising a column transistor (P1), a first capacitor (C1) coupled between a gate of the column transistor and a second terminal of the select switch, a sampling switch (CDS) coupled between the gate and drain of the column transistor, a second capacitor (C2) coupled between a source of the column transistor and a first terminal of a column switch (COL); the column switching circuits being collectively configured to perform in parallel sequentially correlated double sampling operations on pixel readout data;
a chip switching circuit (380) connected to receive a data signal from each column switching circuit, comprising a chip transistor (P2) having a gate coupled to a second terminal of the column switch and having a source for providing an output signal, and a chip switch (CHIP) coupled between the gate and a drain of the chip transistor; the chip switching circuit being configured to successively receive serial analog inputs from said switching circuit.

2. An integrated imaging chip according to Claim 1, further comprising a current sink (I_{PIXEL}) coupled between the first terminal of the first capacitor and the drain of the column transistor, such that the charge on the first capacitor can be drawn off when the sampling switch is closed and the select switch is open.

3. An integrated imaging chip according to either of Claims I and 2, wherein the storage of voltages in the first sampling interval is done on a column-by-column basis, and wherein the provision of voltages in the second sampling interval is provided by a plurality of on-hot-encoded flip-flops, each comprising:
an edge-triggered D-type flip-flop, having a clock input for receiving a column clock, and having an output;
a first NAND gate having a first input connected to the output of the D-type flip-flop and having a second input for receiving a control clock providing synchronized timing signals for a column; and
a second NAND gate having a first input connected to an output of the first NAND gate and having a second input for receiving a pixel clock.

4. A method for reading pixel voltages of an integrated imaging chip according to claim 1, the method comprising the steps of:
in a first sampling interval after the integration interval, by a sequenced activation of the column switch, the select switch, the chip switch and the sampling switch storing a voltage (V_{PD} - V_{gsN1}) across the first capacitor that corresponds to the pixel voltage, less a gate-to-source voltage of the sense transistor, and a storing a voltage (V_{gsP1}) across the second capacitor that corresponds to a gate-to-source voltage of the column transistor; and
in a second sampling interval after the first sampling interval, by a sequenced activation of the sampling switch, the chip switch, the reset switch and the column switch providing a voltage (V_{RES} - V_{PD}) to the gate of the column transistor that corresponds to the change in voltage at the gate of the sense transistor, and which has cancelled a gate-to-source voltage (V_{gsN1}) of the sense transistor and providing a voltage (V_{RES} - V_{PD}) to the gate of the chip transistor that corresponds to the change of voltage of the sense transistor, and which has cancelled a gate-to-source voltage (V_{gsP1}) of the column transistor.

5. A method according to Claim 4, wherein the step of storing voltages in the first sampling interval is performed by all of the column switching circuits in a row in parallel, and the step of providing voltages in the second sampling interval is performed in the row by one column switching circuit at a time.

6. An imaging system, comprising:
a focusing element (181); and
an integrated imaging chip (182) for receiving images from the focusing element, the integrated imaging chip being according to any one of Claims 1 to 4.

## Patentansprüche

1. Integrierter Bilderzeugungschip, mit einer Matrix aus Pixelschaltungen (300), die in Spalten und Zeilen angeordnet sind und wovon jede einen Lesetransistor, ein mit einem Gate des Lesetransistors (N1) gekoppeltes lichtemfindliches Element (PD), einen Auswahlschalter (SEL), wovon ein erster Anschluss mit einer Source des Lesetransistors gekoppelt ist, und einen Rücksetzschalter (RES), wovon ein Anschluss mit dem Gate des Lesetransistors gekoppelt ist, umfasst, wobei der Rücksetzschalter dazu dient, am Gate des Lesetransistors während eines einem Integrationsintervall vorhergehenden Rücksetzintervalls eine Rücksetzspannung (V_{RES}) bereitzustellen, wobei das lichtempfindliche Element in Reaktion auf einen Lichtpegel die Spannung am Gate des Lesetransistors während des Integrationsintervalls in Übereinstimmung mit dem Lichtpegel am lichtempfindlichen Element ändert, um dadurch am Gate des Leseverstärkers am Ende des Integrationsintervalls eine Pixelspannung (V_{PD}) hervorzurufen, wobei durch Schließen des Auswahlschalters das Auslesen der Pixelschaltung gewählt wird, **dadurch gekennzeichnet, dass** der Chip ferner umfasst:
mehrere Spaltenschaltschaltungen (340), wovon jede so angeschlossen ist, dass sie von wenigstens einer Spalte aus Pixelschaltungen Pixelsignale empfängt, wobei jede Spaltenschaltschaltung einen Spaltentransistor (P1), einen ersten Kondensator (C1), der zwischen ein Gate des Spaltentransistors und einen zweiten Anschluss des Auswahlschalters geschaltet ist, einen Abtastschalter (CDS), der zwischen das Gate und den Drain des Spaltentransistors geschaltet ist, und einen zweiten Kondensator (C2), der zwischen eine Source des Spaltentransistors und einen ersten Anschluss eines Spaltenschalters (COL) geschaltet ist, umfasst; wobei die Spaltenschaltschaltungen gemeinsam so konfiguriert sind, dass sie sequentiell korrelierte Doppelabtastoperationen an Pixelauslesedaten parallel ausführen;
eine Chipschaltschaltung (380), die so angeschlossen ist, dass sie ein Datensignal von jeder Spaltenschaltschaltung empfängt, und einen Chiptransistor (P2), wovon ein Gate mit einem zweiten Anschluss des Spaltenschalters gekoppelt ist und wovon eine Source ein Ausgangssignal bereitstellt, sowie einen Chipschalter (CHIP), der zwischen das Gate und den Drain des Chiptransistors geschaltet ist, umfasst; wobei die Chipschaltschaltung so konfiguriert ist, dass sie nacheinander serielle analoge Eingänge von der Schaltschaltung empfängt.

2. Integrierter Bilderzeugungschip nach Anspruch 1, ferner mit einer Stromsenke (I_{PIXEL}), die zwischen den ersten Anschluss des ersten Kondensators und den Drain des Spaltentransistors geschaltet ist, so dass die Ladung des ersten Kondensators abgezogen werden kann, wenn der Abtastschalter geschlossen ist und der Auswahlschalter geöffnet ist.

3. Integrierter Bilderzeugungschip nach einem der Ansprüche 1 und 2, bei dem die Speicherung von Spannungen im ersten Abtastintervall auf spaltenweiser Basis geschieht und bei dem das Bereitstellen der Spannungen in dem zweiten Abtastintervall durch mehrere one-hot-codierte Flipflops geschaffen wird, wovon jedes umfasst:
ein flankengetriggertes D-Flipflop, das einen Takteingang zum Empfangen eines Spaltentakts und einen Ausgang besitzt;
ein erstes NAND-Gatter, das einen ersten Eingang besitzt, der an den Ausgang des D-Flipflops angeschlossen ist, und einen zweiten Eingang besitzt, der einen Steuertakt empfängt, der für eine Spalte synchronisierte Taktsignale bereitstellt; und
ein zweites NAND-Gatter, das einen ersten Eingang besitzt, der an einen Ausgang des ersten NAND-Gatters angeschlossen ist, und einen zweiten Eingang besitzt, der einen Pixeltakt empfängt.

4. Verfahren zum Lesen von Pixelspannungen eines integrierten Bilderzeugungschips nach Anspruch 1, das die folgenden Schritte umfasst: in einem ersten Abtastintervall nach dem Integrationsintervall durch aufeinander folgendes Aktivieren des Spaltenschalters, des Auswahlschalters, des Chipschalters und des Abtastschalters Speichern einer Spannung (V_{PD}-V_{gsN1}) über dem ersten Kondensator, die der Pixelspannung entspricht und kleiner als eine Gate-Source-Spannung des Lesetransistors ist, und Speichern einer Spannung (V_{gsP1}) über dem zweiten Kondensator, die einer Gate-Source-Spannung des Spaltentransistors entspricht; und
in einem zweiten Abtastintervall nach dem ersten Abtastintervall durch aufeinander folgende Aktivierung des Abtastschalters, des Chipschalters, des Rücksetzschalters und des Spaltenschalters Bereitstellen einer Spannung (V_{RES}-V_{PD}) für das Gate des Spaltentransistors, die einer Spannungsänderung am Gate des Lesetransistors entspricht und eine Gate-Source-Spannung (V_{gsN1}) des Lesetransistors ausgeglichen hat, und Bereitstellen einer Spannung (V_{RES}-V_{PD}) für das Gate des Chiptransistors, die der Spannungsänderung des Lesetransistors entspricht und die eine Gate-Source-Spannung (V_{gsP1}) des Spaltentransistors ausgeglichen hat.

5. Verfahren nach Anspruch 4, bei dem der Schritt des Speicherns von Spannungen in dem ersten Abtastintervall durch alle Spaltenschaltschaltungen in einer Zeile parallel ausgeführt wird und der Schritt des Bereitstellens von Spannungen in dem zweiten Abtastintervall in der Zeile jeweils durch eine Spaltenschaltschaltung ausgeführt wird.

6. Bilderzeugungssystem, mit:
einem Fokussierungselement (181); und
einem integrierten Bilderzeugungschip (182) zum Empfangen von Bildern von dem Fokussierungselement, wobei der integrierte Bilderzeugungschip wie in einem der Ansprüche 1 bis 4 definiert beschaffen ist.

## Revendications

1. Puce intégrée d'imagerie comportant un réseau de circuits de pixels (300) disposés suivant des colonnes et des lignes, chaque circuit de pixel comprenant un transistor de détection, un élément photosensible (PD) couplé à une grille du transistor de détection (NI), un interrupteur de sélection (SEL) possédant une première borne couplée à une source du transistor de détection et un interrupteur de remise à l'état initial (RES) comportant une borne couplée à la grille du transistor de détection, l'interrupteur de remise à l'état initial servant à appliquer une tension de remise à l'état initial (V_{RES}) à la grille du transistor de détection pendant l'intervalle de remise à l'état initial qui précède un intervalle d'intégration, l'élément photosensible étant sensible à un niveau de lumière qui lui est appliqué pour modifier la tension appliquée à la grille du transistor de détection pendant l'intervalle d'intégration en fonction du niveau de lumière appliqué à l'élément photosensible, pour provoquer l'application d'une tension de pixel (V_{PD}) à la grille du transistor de détection à la fin de l'intervalle d'intégration, le circuit de pixel étant sélectionné pour la lecture au moyen de la fermeture de l'interrupteur de sélection, **caractérisée en ce que** la Puce comporte en outre :
une pluralité de circuits (340) de commutation de colonne, connectés chacun de manière à recevoir des signaux de pixels de la part d'au moins une colonne de circuits de pixels, chaque circuit de commutation de colonne comprenant un transistor de colonne (P1), un premier condensateur (C1) couplé entre une grille du transistor de colonne et une seconde borne de l'interrupteur de sélection, un interrupteur d'échantillonnage (CDS) couplé entre la grille et le drain du transistor de colonnes, un second condensateur (C2) couplé entre une source de transistors de colonnes et une première borne d'un interrupteur de colonnes (CCL); les circuits de commutation de colonne étant configurés collectivement de manière à exécuter les opérations d'échantillonnage doubles en parallèles et corrélées séquentiellement sur des données de lecture de pixels;
un circuit de commutation de puce (380) connecté pour recevoir un signal de données de la part de chaque circuit de commutation de colonne, comprenant un transistor de Puce (P2) possédant une grille couplée à une seconde borne de l'interrupteur de colonnes et possédant une source pour délivrer un signal de sortie, et un interrupteur de puce (CHIP) couplé entre la grille et un drain du transistor de puce; le circuit de commutation de puces étant configuré de manière à recevoir successivement des entrées analogiques en série provenant dudit circuit de commutation.

2. Puce intégrée d'imagerie selon la revendication 1, comprenant en outre un puits de courant (I_{PIXEL}) couplé entre la première borne du premier condensateur et le drain du transistor de colonne de telle sorte que la charge appliquée au premier condensateur peut être prélevée lorsque l'interrupteur d'échantillonnage est fermé et que l'interrupteur de sélection est ouvert.

3. Puce intégrée d'imagerie selon l'une ou l'autre des revendications 1 et 2, dans laquelle la mémorisation de tensions pendant le premier intervalle d'échantillonnage est exécutée sur une base colonne par colonne, et dans laquelle la délivrance de tensions dans le second intervalle d'échantillonnage est pourvue d'une pluralité de bascules bistables codées à chaud, chacune comprenant :
une bascule bistable de type D déclenchée par les flancs des signaux et comportant une entrée de signal d'horloge servant à recevoir un signal d'horloge de colonne et comportant une sortie;
une première porte NON-ET possédant une première entrée connectée à la sortie de la bascule bistable de type D et possédant une seconde entrée pour recevoir un signal d'adresse de commande fournissant des signaux de cadencement synchronisés pour une colonne;
une seconde porte NON-ET possédant une première entrée connectée à une sortie de la première porte NON-ET et possédant une seconde entrée pour recevoir un signal d'horloge de pixel.

4. Procédé pour lire des tensions de pixels d'une puce intégrée d'imagerie selon la revendication 1, le procédé comprenant les étapes consistant à :
lors d'un premier intervalle d'échantillonnage après l'intervalle d'intégration, au moyen d'une activation séquencée de l'interrupteur de colonne, de l'interrupteur de sélection, de l'interrupteur de puce et de l'interrupteur d'échantillonnage mémoriser aux bornes du premier condensateur une tension (V_{PD} - V_{gsN1}), qui correspond à la tension de pixel, moins une tension grille-source du transistor de détection, et mémorisent une tension (V_{gsP1}) aux bornes du second condensateur, qui correspond à une tension grille-source du transistor de colonne; et
lors d'un second intervalle d'échantillonnage, après le premier intervalle d'échantillonnage, au moyen d'une activation séquencée de l'interrupteur d'échantillonnage, de l'interrupteur de puce et de l'interrupteur de remise à l'état initial et de l'interrupteur de colonne, appliquer à la grille du transistor de colonne une tension (V_{RES}-V_{PD}) qui correspond à la variation de tension au niveau de la grille du transistor de détection et qui a annulé une tension grille-source (V_{gsN1}) du transistor de détection, et appliquer à la grille du transistor de puce une tension (V_{RS} - V_{PD}) qui correspond à la variation de la tension du transistor de détection et qui a annulé une tension grille-source (V_{gsP1}) du transistor de colonne.

5. Procédé selon la revendication 4, selon lequel l'étape de mémorisation de tension pendant le premier intervalle d'échantillonnage est exécutée par l'ensemble des circuits de commutation de colonne dans une ligne en parallèle, et l'étape d'application de tension pendant le second intervalle d'échantillonnage est exécutée à un instant donné dans la ligne par un circuit de commutation de colonne.

6. Système d'imagerie comprenant :
un élément de focalisation (180); et
une puce intégrée d'imagerie (182) pour recevoir des images de la part de l'élément de focalisation, la puce intégrée d'imagerie étant agencée conformément à l'une quelconque des revendications 1 à 4.
